# EUROPÄISCHE PATENTSCHRIFT

(11) **EP 0 842 686 B1**
(45) Veröffentlichungstag und Bekanntmachung des Hinweises auf die Patenterteilung: **02.04.2003**
(21) Anmeldenummer: 96810809.2
(22) Anmeldetag: 19.11.1996
(51) Int. Cl.: B01D 3/14

(54) **Destillationsanlage mit Wärmepumpe**
Distillation apparatus with heat pump
Appareil de distillation avec pompe à chaleur

(43) Veröffentlichungstag der Anmeldung: 20.05.1998
(73) Patentinhaber: Sulzer Chemtech AG, 8404 Winterthur (CH)
(72) Erfinder: Meszaros, Istvan, Dr., 8408 Winterthur (CH)
(74) Vertreter: Sulzer Management AG

(56) Entgegenhaltungen:
- EP-A- 0 155 578
- EP-A- 0 210 888
- DE-B- 1 114 168
- US-A- 4 023 946
- US-A- 4 626 321
- CHEMICAL ENGINEERING PROGRESS, Bd. 86, Nr. 6, 1.Juni 1990, Seiten 60-65, XP000173792 MEILI A: "HEAT PUMPS FOR DISTILLATION COLUMNS"

## Beschreibung

Die Erfindung betrifft eine Destillationsanlage mit Wärmepumpe gemäss Oberbegriff von Anspruch 1 sowie ein Destillationsverfahren mit einer derartigen Anlage.

Es ist bekannt, dass bei der Destillation mit einer Kolonne die Brüden zwecks Energieeinsparung mittels einer Wärmepumpe genutzt werden können. Ein Teil der am Kopf der Kolonne anfallenden Wärmeenergie wird dabei durch die Wärmepumpe auf ein höheres Temperaturniveau gebracht und die so transformierte Wärmeenergie für die Beheizung eines Sumpfverdampfers genutzt. Dabei kann beispielsweise mit Radialverdichtern eine direkte Brüdenverdichtung vorgenommen werden

Ist das Kopfprodukt Wasser, so kann bekanntermassen für die Verdichtung der Brüden kostengünstig ein mit Wasserdampf betriebener Dampfstrahlverdichter verwendet werden. Aufgabe der Erfindung ist es, eine kostengünstige Destillationsanlage zu schaffen, die mit einer Dampfstrahl-Wärmepumpe betreibbar ist und mit der ein Verfahren durchführbar ist, für das gilt: ein bei diesem Destillationsverfahren entstehendes Kopfprodukt besteht nicht aus Wasser und ist daher ungeeignet, als Arbeitsmittel der Wärmepumpe eingesetzt und insbesondere in Dampfform direkt als eine Niedertemperaturwärme liefernde Quelle verwendet zu werden. Diese Aufgabe wird durch die in Anspruch 1 definierte Anlage gelöst.

Die Destillationsanlage umfasst eine Wärmepumpe, deren Arbeitsmittel mittels eines Dampfstrahlverdichters verdichtet wird. Im Abtriebsteil einer Destillationskolonne der Anlage ist eine Sammelstelle für eine Flüssigkeit angeordnet. Zumindest ein Teil der gesammelten Flüssigkeit ist verdampft als Strippdampf vorgesehen. Es führen Verbindungen von der Sammelstelle zu einem ersten und zu einem zweiten Verdampfer. In diesen Verdampfern ist die Flüssigkeit bei erhöhtem beziehungsweise reduziertem Druck verdampfbar. Der Dampfstrahlverdichter ist derart mit den beiden Verdampfern und der Kolonne verbunden, dass der Dampf aus dem zweiten Verdampfer unter einer Treibstrahlwirkung des Dampfes aus dem ersten Verdampfer komprimierbar und in der Kolonne als Strippdampf verwendbar ist. In der Verbindung zu dem ersten Verdampfer ist eine Pumpe angeordnet und in der Verbindung zu dem zweiten Verdampfer ist zumindest ein Drosselorgan enthalten.

In einem bevorzugten Sonderfall arbeitet der Dampfstrahlverdichter mit verdampftem Sumpfprodukt als Treibstrahl wie auch als Arbeitsmittel (wobei unter Arbeitsmittel der Stoff verstanden wird, mit dem die Wärmepumpe die Wärmetransformation durchführt: Wärmeaufnahme bei niedriger Temperatur / Wärmeabgabe bei erhöhter Temperatur). Das resultierende Dampfgemisch wird in die Kolonne eingespeist und wirkt dort als Strippmittel. Anstelle des Sumpfprodukts kann Flüssigkeit aus einer Sammelstelle vorgesehen sein, die zwischen zwei Einbautenabschnitten des Abtriebsteils angeordnet ist. Die Niedertemperaturwärme gewinnt man durch Kondensation eines Teils des dampfförmigen Kopfproduktes oder durch Kondensation von Dampf, der zwischen zwei Einbautenabschnitten des oberen Teils der Kolonne abgezweigt wird.

Statt einer einzigen Wärmepumpe kann auch eine Mehrzahl von Wärmepumpen mit Dampfstrahlverdichtern vorgesehen sein, wobei beispielsweise das Sumpfprodukt als Arbeitsmittel einer ersten Wärmepumpe und ein Zwischenprodukt als Arbeitsmittel einer zweiten Wärmepumpe verwendet werden. Die Temperaturen der Niedertemperatur-Wärmequellen können gleich oder verschieden sein. Die Treibstrahlen von zwei oder mehr Wärmepumpen können durch einen gemeinsamen Verdampfer gespiesen werden. Auch kann eine gemeinsame Niedertemperaturquelle zwei oder mehr Wärmepumpen zugeordnet sein.

Nachfolgend wird die Erfindung anhand der Zeichnungen erläutert. Es zeigen:
- Fig. 1: ein erstes Ausführungsbeispiel der erfindungsgemässen Destillationsanlage und
- Fig. 2: ein zweites Ausführungsbeispiel.

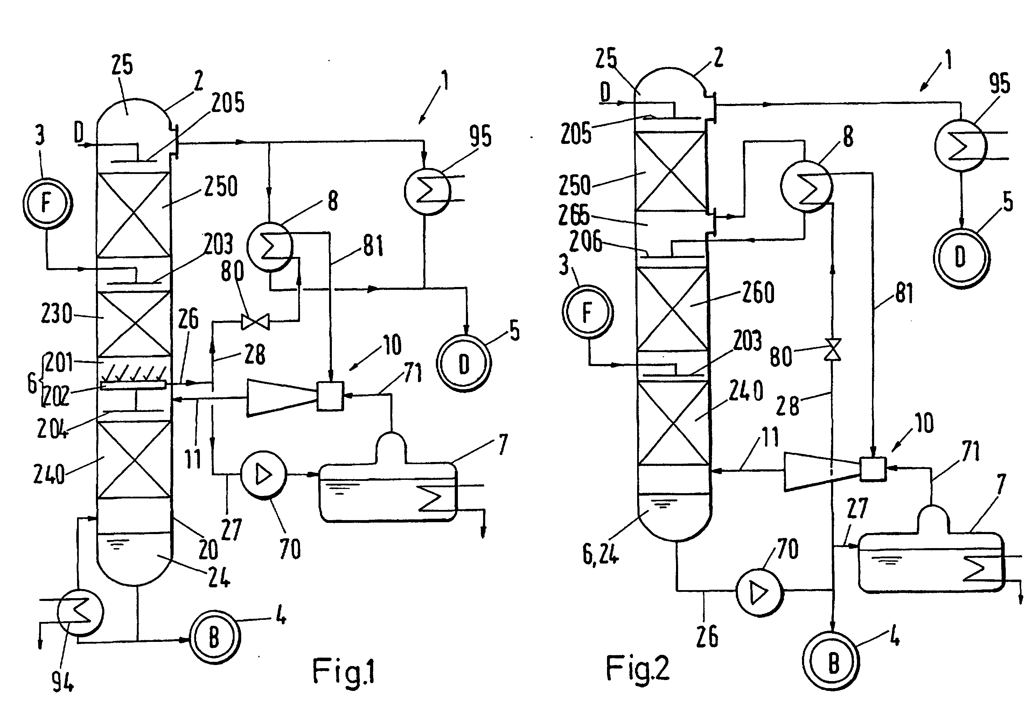

Die in Fig.1 dargestellte Destillationsanlage mit

Wärmepumpe weist folgende Teile auf: eine Kolonne 2 mit einem Abtriebsteil 20, einem Sumpf 24, einem Sumpfverdampfer 94, einem Kopf 25 und einem Kondensator 95 für Brüden aus der Kolonne; einen Dampfstrahlverdichter 10, einen ersten Verdampfer 7, eine Pumpe 70, einen zweiten Verdampfer 8, ein Drosselorgan 80; ferner diverse Verbindungsleitungen.

Eine Rohlösung F aus einem Reservoir 3 wird durch die Destillation in Fraktionen zerteilt, nämlich in ein Sumfprodukt B (Reservoir 4) und in ein Destillat D (Reservoir 5). Die Rohlösung F ist beispielsweise ein Gemisch von iso-Propanol, Wasser und Aceton mit folgender Zusammensetzung in Gew-%: 82.5, 16.5 bzw. 1.0. Das erzeugte Sumpfprodukt ist Wasser, das noch Aceton enthält; das Destillat besteht aus 85.6 % iso-Propanol, 13.4 % Wasser und 1.0 % Aceton. Die nachfolgenden Zahlen beziehen sich auf dieses besondere Verfahrensbeispiel.

Die Kolonne 2 enthält Einbautenabschnitte 230, 240 und 250, die beispielsweise geordnete Packungen sind. Es können auch Füllkörper-Schüttungen oder Böden als Einbauten vorgesehen sein. Die Rohlösung F gelangt über einen Verteiler 203 auf den Einbautenabschnitt 230. Unter diesem Abschnitt 230 ist ein Flüssigkeitssammler 6 (Lamellen 201, Rinne 202) angeordnet, der so konstruiert ist, dass die Strömung von nach oben strömendem Dampf weitgehend ungedrosselt erfolgt. Die Flüssigkeit der Sammelstelle 6 gelangt zum Teil in einen Verteiler 204 des unteren Einbautenabschnitts 240; zum Teil wird sie über eine Leitung 26 und Verbindungen 27 bzw. 28 in die Verdampfer 7 und 8 transportiert. Destillat D wird in den Kopf 25 der Kolonne rückgeführt und dort mittels des Verteilers 205 auf den oberen Einbautenabschnitt 250 verteilt.

Der Dampfstrahlverdichter 10 wird über die Leitung 71 mit Treibdampf aus dem ersten Verdampfer 7 (absoluter Druck für das besondere Verfahrensbeispiel: 19 bar; Temperatur: 182°C) gespeist. Aus dem zweiten Verdampfer 8, dessen Wärmequelle durch kondensierende Brüden gebildet ist, wird Dampf (1 bar, 83°C) über die Leitung 81 angesaugt. Die kondensierten Brüden gelangen in das Reservoir 5. Durch die Dampfstrahlverdichtung wird ein Strippdampf erzeugt (2.3 bar, 148°C), der über die Leitung 11 bei der Sammelstelle 6 in die Kolonne 2 eingespeist wird. Flüssigkeit aus dieser Sammelstelle 6 wird zu einem Teil (67 %) mit der Pumpe 70 in den ersten Verdampfer 7 gefördert (Druckerhöhung: 16.7 bar) und zu einem Teil (33 %) über das Drosselorgan 80 in den zweiten Verdampfer 8 geleitet (Druckerniedrigung: 1.3 bar).

Das zweite, in Fig.2 dargestellte Ausführungsbeispiel unterscheidet sich vom ersten in zwei Punkten: a) Der Sumpf 24 der Kolonne 2 ist die Sammelstelle 6 für die Flüssigkeit, die für die erfindungsgemässe Herstellung von Strippdampf mit dem Dampfstrahlverdichter 10 verwendet wird. b) Dampf, der in einem Raum 265 zwischen zwei Einbautenabschnitten 250 und 260 des oberen Teils der Kolonne 2 abgezweigt wird, bildet die Wärmequelle für den zweiten Verdampfer 8.

Der im zweiten Verdampfer 8 auskondensierte Dampf wird im vorliegenden Beispiel mittels eines Verteilers 206 auf den mittleren Einbautenabschnitt 260 aufgegeben. Da der Strippdampf aus Sumpfprodukt B erzeugt wird, entfällt ein Sumpfverdampfer 94. Die Pumpe 70 ist vor der Verzweigung der beiden Leitungen 27 und 28 in der Leitung 26 angeordnet. Diese besondere Anordnung ist nicht notwendig. Es könnte die Verzweigung auch vor der Pumpe 70 liegen, so dass sich die Pumpe 70 nur in der Verbindung 27 befände; und in der Verbindung 28 könnte - falls überhaupt erforderlich - eine zweite Pumpe vorgesehen sein, die gegebenenfalls zur Überwindung einer Differenz des statischen Flüssigkeitsdrucks zwischen Sumpf 24 und zweitem Verdampfer 8 benötigt würde.

Es sind natürlich auch Kombinationen der beiden beschriebenen Ausführungsbeispiele möglich: a) Anordnung des Dampfstrahlverdichters 10 und des ersten Verdampfers 7 wie in dem Beispiel der Fig.2, Anordnung des zweiten Verdampfers 8 gemäss Fig.1; b) Anordnung des Dampfstrahlverdichters 10 und des ersten Verdampfers 7 gemäss Fig.1, Anordnung des zweiten Verdampfers 8 gemäss Fig.2.

Es folgt ein Verfahrensbeispiel für die erste Kombination gemäss Punkt a.

Rohlösung F, gebildet durch ein Gemisch von 1-Buten, n-Butan, c/t-2-Buten, mit der Zusammensetzung (Gew-%): 99.0 %, 0.2 % bzw. 0.8 %. - Entstehende Fraktionen mit jeweils entsprechender Zusammensetzung: Destillat D mit 99.8 %, 0.0 % bzw. 0.2 % und Sumpfprodukt B mit 55.6 %, 7.8 % bzw. 36.6 %. - Dampf des ersten Verdampfers 7: 24.4 bar, 120°C. - Dampf des zweiten Verdampfers 8: 2.8 bar, 27°C. - Durch Dampfstrahlverdichter 10 erzeugter Strippdampf: 5.6 bar, 69°C.

In der Praxis stehen die beschriebenen Verfahren in Konkurrenz mit Destillationsverfahren ohne Wärmepumpen, bei denen der Strippdampf mittels eines Sumpfverdampfers 94 erzeugt wird und die Brüden ohne Wärmerückgewinnung in einem Kondensator 95 verflüssigt werden. Mit der erfindungsgemässen Anlage lassen sich bei dem Aufwand für die Energie wesentliche Kosteneinsparungen erzielen, wobei die Zusatzkosten für den Dampfstrahlverdichter (einschliesslich der Einrichtungen für die Treibstrahlerzeugung) relativ gering ausfallen. Die Kosteneinsparungen für die Energie sind 34 % im ersten Verfahrensbeispiel (Fig.1) und 36 % im zweiten Verfahrensbeispiel (Kombination gemäss Punkt a).

Wie bereits festgehalten, bezieht sich die Erfindung auch auf Anlagen, bei denen gleichzeitig eine Mehrzahl von Dampfstrahl-Wärmepumpen zum Einsatz kommen.

## Patentansprüche

1. Destillationsanlage (1) mit einer Wärmepumpe, deren Arbeitsmittel mittels eines Dampfstrahlverdichters (10) verdichtbar ist, mit einer einen Abtriebsteil (20) umfassenden Kolonne (2), mit einem ersten (7) und einem zweiten Verdampfer (8) und mit einer Sammelstelle (6) für eine Flüssigkeit im Abtriebsteil, wobei
der zweite Verdampfer zugleich ein Verflüssiger ist, mit dem Kondensationswärme von Dampf aus der Kolonne rückgewinnbar ist,
Verbindungen (26, 27, 28) von der Sammelstelle zum ersten und zum zweiten Verdampfer führen, in welchen die gesammelte Flüssigkeit bei erhöhtem beziehungsweise reduziertem Druck verdampfbar ist,
der Dampfstrahlverdichter derart mit den beiden Verdampfern und der Kolonne verbunden ist (71, 81, 11), dass der Dampf aus dem zweiten Verdampfer unter einer Treibstrahlwirkung des Dampfes aus dem ersten Verdampfer komprimierbar und in der Kolonne als Strippdampf verwendbar ist,
in der Verbindung zu dem ersten Verdampfer eine Pumpe (70) angeordnet ist sowie in der Verbindung zu dem zweiten Verdampfer zumindest ein Drosselorgan (80) enthalten ist
und die Verbindung für den erzeugten Strippdampf bei der Sammelstelle in die Kolonne führt.

2. Anlage nach Anspruch 1, **dadurch gekennzeichnet, dass** der Sumpf (24) der Kolonne (2) die Sammelstelle (6) ist.

3. Anlage nach Anspruch 1, **dadurch gekennzeichnet, dass** ein Flüssigkeitssammler (201, 202), der zwischen zwei Einbautenabschnitten (230, 240) des Abtriebsteils (20) angeordnet ist, die Sammelstelle (6) ist.

4. Anlage nach einem der Ansprüche 1 bis 3, **dadurch gekennzeichnet, dass** dampfförmiges Kopfprodukt der Kolonne (2) als Wärmequelle für den zweiten Verdampfer (8) vorgesehen ist.

5. Anlage nach einem der Ansprüche 1 bis 3, **dadurch gekennzeichnet, dass** Dampf, der zwischen zwei Einbautenabschnitten (250, 260) des oberen Teils der Kolonne (2) abzweigbar ist, als Wärmequelle für den zweiten Verdampfer (2) vorgesehen ist.

6. Anlage nach einem der Ansprüche 1 bis 5, **dadurch gekennzeichnet, dass** eine Mehrzahl von Wärmepumpen mit Dampfstrahlverdichtern (10) und jeweils einem ersten sowie zweiten Verdampfer (7, 8) vorgesehen ist, dass insbesondere das Sumpfprodukt (B) das Arbeitsmittel einer ersten Wärmepumpe und ein Zwischenprodukt das Arbeitsmittel einer zweiten Wärmepumpe ist.

7. Anlage nach Anspruch 6, **dadurch gekennzeichnet, dass** den zweiten Verdampfern (8) der Wärmepumpen verschiedene Wärmequellen zugeordnet sind, deren Temperaturen insbesondere auf verschiedenen Niveaus sind.

8. Anlage nach Anspruch 6 oder 7, **dadurch gekennzeichnet, dass** mindestens zwei Wärmepumpen einen gemeinsamen ersten Verdampfer (7) oder einen gemeinsamen zweiten Verdampfer (8) aufweisen.

9. Destillationsverfahren mit einer Anlage gemäss einem der Ansprüche 1 bis 8, **dadurch gekennzeichnet, dass** in der oder jeder Wärmepumpe der Dampf aus dem zugeordneten zweiten Verdampfer (8) auf einen Druck verdichtet wird, der rund den zweifachen Wert des Verdampferdrucks hat.

## Claims

1. Distillation plant (1) comprising a heat pump whose working fluid can be compressed by means of a vapour jet compressor (10), comprising a column (2) including a stripper part (20), comprising a first vaporiser (7) and a second vaporiser (8) and a collection location (6) for a liquid in the stripper part, wherein
the second vaporiser is simultaneously a liquefier with which condensation heat can be recovered from vapour from the column,
connections (26, 27, 28) lead from the collection location to the first vaporiser (7) and to the second vaporiser (8) in which the liquid can be vaporised at an elevated pressure and at a reduced pressure respectively,
the vapour jet compressor is connected to the two vaporisers and to the column (71, 81, 11) in such a manner that the vapour from the second vaporiser can be compressed under a driving jet action of the vapour from the first vaporiser and used in the column as strip vapour,
a pump (70) is arranged in the connection to the first vaporiser and at least one restrictor member (80) is contained in the connection to the second vaporiser,
and the connection for the strip vapour produced leads into the column at the collection location.

2. Plant in accordance with claim 1 **characterised in that** the sump (24) of the column (2) is the collection location (6).

3. Plant in accordance with claim 1 **characterised in that** a liquid collector (201, 202) which is arranged between two installation sections (230, 240) of the stripper part (20) is the collection location (6).

4. Plant in accordance with one of the claims 1 to 3 **characterised in that** the vaporous head product of the column (2) is provided as a heat source for the second vaporiser (8).

5. Plant in accordance with one of the claims 1 to 3 **characterised in that** vapour which is branched off between two installation sections (250, 260) of the upper part of the column (2) is provided as a heat source for the second vaporiser (8).

6. Plant in accordance with one of the claims 1 to 5 **characterised in that** a plurality of heat pumps with vapour jet compressors (10) and in each case with a first vaporiser as well as a second vaporiser (7, 8) is provided; and **in that** the sump product (B) in particular is the working fluid of a first heat pump and an intermediate product is the working fluid of a second heat pump.

7. Plant in accordance with claim 6 **characterised in that** different heat sources are associated with the second vaporisers (8) of the heat pumps in particular with the temperatures of the heat sources being at different levels.

8. Plant in accordance with claim 6 or claim 7 **characterised in that** at least two heat pumps have a common first vaporiser (7) or a common second vaporiser (8).

9. Distillation method with a plant in accordance with one of the claims 1 to 8 **characterised in that** in the or in each heat pump the vapour from the associated second vaporiser (8) is compressed to a pressure which has about twice the value of the vaporiser pressure.

## Revendications

1. Installation de distillation (1) avec pompe à chaleur, dont le fluide de travail peut être condensé à l'aide d'un compresseur à jet de vapeur (10), avec une colonne (2) comportant un élément de rectification (20), avec un premier (7) et un deuxième évaporateur (8) et un collecteur (6) pour un liquide dans l'élément de rectification,
le deuxième évaporateur étant en même temps un condenseur grâce auquel la chaleur de condensation de la vapeur peut être récupérée à partir de la colonne,
des liaisons (26, 27, 28) provenant du collecteur conduisant au premier et au deuxième évaporateur dans lesquels le liquide collecté peut être évaporé sous une pression augmentée ou réduite,
le compresseur à jet de vapeur étant relié avec les deux évaporateurs et avec la colonne (71, 81, 11) de telle sorte que la vapeur provenant du deuxième évaporateur puisse être comprimée sous l'action du jet de vapeur provenant du premier évaporateur et utilisée en tant que vapeur de stripage dans la colonne,
une pompe (70) étant disposée dans la liaison vers le premier évaporateur et un organe d'étranglement (80) étant disposé dans la liaison vers le deuxième évaporateur,
et la liaison pour la vapeur de stripage produite près du collecteur conduit dans la colonne.

2. Installation selon la revendication 1, **caractérisée en ce que** le bac de décantation (24) de la colonne (2) est le collecteur (6).

3. Installation selon la revendication 1, **caractérisée en ce qu'**un collecteur de liquide (201, 202), disposé entre deux sections encastrées (230, 240) de l'élément de rectification (20), est le collecteur (6).

4. Installation selon l'une des revendications 1 à 3, **caractérisée en ce que** la tête de distillat vaporisée de la colonne (2) est prévue en tant que source de chaleur du deuxième évaporateur (8).

5. Installation selon l'une des revendications 1 à 3, **caractérisée en ce que** la vapeur, pouvant être déviée entre deux sections encastrées (250, 260) de la partie supérieure de la colonne (2) est prévue en tant que source de chaleur du deuxième évaporateur (8).

6. Installation selon 1 (une des revendications 1 à 5, **caractérisée en ce qu'**une pluralité de pompes à chaleur avec compresseurs à jet de vapeur (10) et un premier ainsi qu'un deuxième évaporateur (7, 8) sont prévus, **en ce que** notamment le résidu (B) est le fluide de travail d'une première pompe à chaleur et un produit intermédiaire est le fluide de travail d'une deuxième pompe à chaleur.

7. Installation selon la revendication 6, **caractérisée en ce que** différentes sources de chaleur, dont les températures sont notamment à différents niveaux, sont attribuées au deuxième évaporateur (8) des pompes à chaleur.

8. Installation selon la revendication 6 ou 7, **caractérisée en ce qu'**au moins deux pompes à chaleur comportent un premier évaporateur commun (7) ou un deuxième évaporateur commun (8).

9. Procédé de distillation avec une installation selon l'une des revendications 1 à 8, **caractérisé en ce que** dans la ou dans chaque pompe à chaleur, la vapeur provenant du deuxième évaporateur (8) correspondant est comprimée à une pression d'environ le double de la pression de l'évaporateur.
